**Europäisches Patentamt**

(19) **European Patent Office**

**Office européen des brevets**

(11) Publication number : **0 353 251 B1**

# (12) EUROPEAN PATENT SPECIFICATION

(45) Date of publication of patent specification :
**30.12.92 Bulletin 92/53**

(51) Int. Cl.⁵ : **C09K 3/18**

(21) Application number : **88904172.9**

(22) Date of filing : **25.04.88**

(86) International application number :
**PCT/US88/01406**

(87) International publication number :
**WO 88/08440 03.11.88 Gazette 88/24**

(54) **GEL COMPOSITION.**

(30) Priority : **01.05.87 US 45889**
**15.04.88 US 181833**

(43) Date of publication of application :
**07.02.90 Bulletin 90/06**

(45) Publication of the grant of the patent :
**30.12.92 Bulletin 92/53**

(84) Designated Contracting States :
**AT BE CH DE FR GB IT LI LU NL SE**

(56) References cited :
**DE-A- 2 007 163**
**FR-A- 2 456 375**
**GB-A- 1 598 807**
**GB-A- 2 080 998**
**US-A- 3 347 974**

(73) Proprietor : **Waterguard Industries, Inc.**
**P.O. Box 1079**
**Channelview, Texas 77530 (US)**

(72) Inventor : **Waterguard Industries, Inc.**
**P.O. Box 1079**
**Channelview, Texas 77530 (US)**

(74) Representative : **Frankland, Nigel Howard et al**
**FORRESTER & BOEHMERT**
**Franz-Joseph-Strasse 38**
**W-8000 München 40 (DE)**

## Description

This invention is for a gel chemical composition. The gel composition is activated by moisture to absorb water and can be used to protect components from water damage. The composition can be a gel or a gel with a tackifier added to make the gel sticky to coat and adhere to surfaces.

The gel composition can be introduced into confined areas such as housings for cable lines and splices to protect the communications cables for extended periods of time. The gel can be introduced into the housing prior or during services of the splices. The tacky gel can be used to coat wires and fill interstitial spaces inside cables during cable manufacturing. In addition to the gel protecting the wires, the composition also heals shorts in lines such as telephone splices which carry a small dc current.

Communications cables such as telephone lines are made up of a multitude of wires, typically copper wire, which are insultated with a sheath of plastic, paper wrapping or other materials. The cable of the many wires is enclosed in a flexible cable cover. Typically the wires are coated with a thin layer of thermoplastic resin such as polyethylene. The wires are drawn through a vessel of heated thermoplastic and as the wire goes through the heated plastic a thin coating is deposited and adheres while cooling onto the wire. This process takes place before wrapping the wire. When the wrapped wires are brought together to make the cable a filler, such as a petroleum gel, is added inside the cable cover to fill the interstitial spaces.

The spliced connections of the communication cables are housed in a casing type closure which can contain thousands of individually spliced wires. The cable splices are protected by housings which enclose the wire splices. The housings are typically maintained under pressure. The housings are laid underground or above ground. The closures are exposed to damaging conditions which can cause leaks in the housings thereby providing an access to water.

In use the wires in the cable are connected to one or more small dc power sources to provide the transmission current that is required and eventually to the telephone terminal equipment, one or more telephone transmitters at one end or location and one or more telephone receivers at the other end. The housings are pressure type closure systems and it is crucial to prevent the entry of invasive water and protect the splices from moisture. The entry of moisture into the cable splices or into a cable which is not surrounded by a closure causes a conductive path through the moisture from wire to wire if the insulation of the wires is not maintained. When this happens, the wires either short out all together or cross-talk is established, thereby disrupting the telephone communications.

One method of providing additional protection to the spliced connections inside the housing includes wrapping the bundle with a flexible material, and injecting a liquid epoxy or urethane into the housing which solidifies within the housing. The composition must be mixed on the site and is typically injected with a gravity flow into the housing. The material typically does not fill the entire interior of the casing and leaves voids. These voids or channels can create an avenue for the entrance of water, particularly at either end of the bundle that exits in the housing and forms the wire bundle in the cable. The wrapping around the splices as in the housing also can cause a funnel effect such that the water enters through a fissure at either end of the closure around the cable and into the wrapping around the bundle.

Other attempts to provide some measure of protection from invasive water are illustrated in the disclosures of various patents. For instance, US-A-3,347,974 describes a cable having plugs or barriers located axially along the length of the cable stated to be composed of a hydrophobic jelly and a swelling medium. Moisture entering the cable causes the medium to swell to fill the cross-sectional area of the cable to prevent passage of moisture. DE-A-2,007,163 describes the introduction, between the cable core and jacket, of a layer of a strip-like carrier which is coated with a material that expands when exposed to water. Various materials are listed as being suitable expanding materials, including starch derivatives, alginates, cellulose derivatives, polyvinyl alcohol, polyvinylpyrrolidone, and polyacrylamide. FR-A-2,456,375 describes cable having a "refill" material therein which is said to consist of mixtures of higher molecular weight organic compounds such as silicone greases, plastisols and polyethylene waxes, or polypropylene with aromatic hydrocarbons.

GB-A-1,598,807 describes two materials for filling the space between bundles of conductors, the first being a mixture of polyacrylamide and calcium carbonate, and the second being a mixture of two materials, one of which is said to swell rapidly into a viscous mass upon contact with water and a second which swells more slowly upon contact with water into a material having a higher viscosity that the viscous material into which the first component swells. Examples of materials which are stated as being appropriate for use as the latter are bentonite, bentone, starch, crosslinked dextrine, polyvinyl alcohol, methylcellulose, cellulose acetate, and other cellulose derivatives. GB-A-2,080,998 purports to describe a telecommunications cable comprising a bundle of insulated conductors coated with a hydrophobic filler, a sleeve, a metal screen and an external sheath wherein a powder which swells in water which is dispersed in a viscous agent such as plybutene, glycerol or a water-soluble wax is interposed between sleeve and metal screen. Various cellulose derivatives are listed as preferred water swellable powders.

According to one aspect of this invention there is provided a composition for protecting the wires of telecommunications and other cables carrying direct current from damage caused by moisture contact with faults or breaks in the insultation thereof, said composition comprising a dielectric gel matrix, a polymer comprising a hydrocarbon backbone having anionic groups attached thereto being dispersed in the gel matrix, the polymer with the anionic groups, when exposed to direct current from a damaged wire, being attracted to the wire causing an insulation to develop which excludes water from the surface of the wire, and said composition being relatively non conductive to a small dc current.

Preferably the anionic groups of the polymer are selected from the group consisting of carboxylate, sulfate, phosphate, and sulfonate or salts thereof, or mixtures of carboxylate, sulfate, phosphate and sulfonate groups.

Conveniently the polymer is selected from the group consisting of polymers of acrylates, methacrylate, diacrylate, polypropenoates, and salts of starch graft co-polymers of polyacrylic acid and polyacrylamide.

Conveniently the gel matrix is selected from the group consisting of silicone, olefins, high viscosity esters, fluorocarbons, petroleum hydrocarbons, glycols and polyglycols.

Preferably the composition additionally comprises a thickener.

Advantageously the composition additionally comprises a hydrophilic substance, which may be selected from the group consisting of glycols, substituted glycols, surfactants, fatty acids, polypropylene with terminating hydroxyl groups, and polyethers.

Advantageously the viscosity of the gel is from 2 centistokes at 100°C to 90,000 centistokes at 40°C.

The invention also relates to a method of preventing or curing a short circuit in wires of a cable carrying direct current caused by moisture contacts with faults or breaks in the insulation thereof, said method comprising the step of applying, to the wires of the cable, a composition as described above.

The present invention thus provides a gel composition with or without a tackifier which can be a cable filling, wire coating, or gel injected into a housing or closure surrounding wires or splices which serve as protection from invasive water. The gel can be introduced into the housing during the manufacturing process or after the housing is placed in service.

The preferred composition is composed of a water absorbent polymer with a hydrocarbon chain as a backbone with pendent anionic groups attached to the polymer backbone. This polymer is mixed with a dielectric gel matrix. In many cases, the dielectric gel matrix is hydrophobic and the addition of a hydrophilic substance is necessary as explained below.

The gel composition itself will provide an initial barrier to water. If water does enter, then the water absorbent polymer is activated and the water is absorbed. In tests water was placed adjacent to the gel composition. The fine powder-like material is seen travelling to the water away from the gel matrix. The composition has exhibited this travelling effect for up to 15 cms (six inches) from the initial gel matrix boundary. This appears to be the water absorbent polymer seeking out the water. Once the water is contacted it forms a gel-like material similar to a mixture of the polymer and water. The addition of a hydrophilic substance in a gel matrix composed of hydrophobic materials appears to promote this travelling to the water effect.

It has been found that the water absorbent polymers with the pendent anionic groups when exposed to small amounts of dc current such as that present in a telephone line appears to cause an attraction of the polymer with the anionic groups to the wires which act as an anode. This apparent attraction of the polymer to the exposed wire brings the polymer into electrochemical association with the wire, and insulation develops which excludes water from the surface of the wire. An insulation builds up and the electric path through the wire is established with the short eliminated. The polymer is typically in a granular form. Thus a typical example of this invention can be considered to be a mixture of the polymer with other substances to form a gel which is relatively non-conductive to dc current and can be used in telecommunications. The gel matrix mixture does not inhibit or prevent the insulation of the wire.

The gel composition plays several roles in protecting contents or components in a housing from moisture damage. First, if there is invasive moisture the gel composition will repel water. Upon the presence of moisture the water abosrbent component of the gel is activated so that it travels out of the gel matrix to absorb the water. This is particularly useful in use with cables wherein a multitude of wires have very small interstitial spaces. The composition will travel into the small spaces if moisture is present. This causes a plugging effect to further invasive water. The benefit is derived whether or not any electrical current is present.

In the case of, for instance, damaged communication splices which carry a low level dc current the polymer also heals a short by accumulating at the surface of the wire as described above. The gel composition will plug the entry of water and heal the short to restore current to the wire. Upon the entrance of any water into the housing and with the exposure to a small dc current the water absorbent, insulation providing polymer in the matrix is activated to insulate the exposed wire.

The gel composition can be varied as to desired viscosity, endurance of environmental conditions and introduced into housing under pressure. The viscosity range for the gel without tackifier can be from 2 centistokes at 100°C to 90,000 centistokes at 40°C. The viscosity is a matter of choice for the service desired and is not intended to be limited. A thin or thick gel can be used. The optimum pentometer penetration measurement range for a gel without tackifier would be 150-425. The gel can be introduced into the housing or enclosure before or during service.

Depending on the components of the gel the healing process can take as short as several minutes to 2 to 3 hours to insulate the wire so that communication will be established. The ater absorbency often starts to occur instantaneously. Typically a fast acting composition is preferred.

Re-entry into a splice housing filled with the prior art epoxy and urethane is difficult, if at all possible. The gel without tackifier of this invention can be manually cleaned off of the splices so that repairs can take place. The gel can be re-used rather than discarded as previously was necessary with the prior art epoxy or urethane encapsulants.

The gel with tackifier is sticky and designed for use during cable manufacturing. The cable filling compound of this invention provides a gel physical barrier as well as the protection of including the polymer which heals shorts which may occur during service.

The invention will now be more particularly described by way of example. The water absorbent polymer has a substantially hydrocarbon chain backbone and pendent anionic groups on the hydrocarbon chain. The anionic groups can be carboxylate, sulfate, phosphate, sulfonate or any other anionic groups which will form a negative charge on exposure to water. The salt form of polymer can be used with a variety of ions including but not limited to alkali metal ions such as lithium, sodium, potassium or alkali earth metals such as magnesium, calcium, strontium, barium, zinc or aluminium. The salt used will depend on the valency of the anionic group attached to the hydrocarbon polymer. Examples of hydrocarbon polymers having the anionic groups listed above include polymers such as polypropenoates, and salts of starch-graft co-polymers of polyacrylic acid and polyacrylamide Also, super water absorbent polymers of acrylates, methacrylate, diacrylate, and polypropenoates, having appropriate anionic groups attached to the respective hydrocarbon backbones thereof, may be used in connection with the present invention.

Typically the wires which serve as the anode are copper. However, wires made of other anodic materials such as aluminum, nickel, cobalt, chromium or iron will serve as an anode with the small voltage necessary to carry telephone transmissions.

The polymers of this nature are typically solids. The polymers have been used to sprinkle over splices or cables that needed drying. There is a need for a protective insulating agent in housings to prevent the affects of invasive water. Dry granules would not easily provide contact with the affected splices. The gel matrix provides a dispersant for the polymer to contact the splices.

The water absorbent polymer can be dispersed in a number of different types of gel matrix and the gel with the hydrocarbon injected into a housing around the splices. The gel with the dispersed polymer can be used in a confined area which allows contact to be made with the gel and the wires or splices.

A number of compositions which are gels or can be thickened to form a gel may be used. The gel matrix must be relatively nonconductive to a small dc current. The matri}: should provide a fairly uniform dispersal of the anionic hydrocarbon polymer in the gel. The viscosity of the gel can be varied depending on the method used to introduce the composition into the confined system and the temperature and other conditions under which the composition will be used.

The gels that are hydrophobic have a tendency to coat the polymer and essentially shield it from the wire which needs to be protected. A small amount of a hydrophilic substance can be added to a hydrophobic gel. The gel is a carrier for the polymer. The hydrophilic materials provide a conduit between the polymer and the moisture.

The gels used in this composition include silicones, petroleum gels, high viscosity esters, glycols, polyglycols, olefins and fluorocarbons. Thickeners can be used with certain compounds to achieve a desired viscosity. Typical thickeners for gels and greases are pyrogenic silica, organophilic clays such a bentonite and hectorite, soaps such as metal stearates, and ureas.

In addition, certain corrosive inhibitors which are typically used in greases were found to have no effect on the water absorbency or insulation characteristics of the polymer gel. The rust inhibitors must be chosen with care because an acid may neutralize the effect of the polymer. A neutral barium dinonylnaphthalene sulfonate did not affect the properties of the present invention. It did have a slight tendency to de-gel one of the gel compositions. A copper passivator which is a liquid copper triazole derivative was used without any adverse affects.

The gel matrix can also be colored with a dye when desired. The amount of dye is dependent on the deepness of color desired. A small amount of Automate green dye was satisfactory to impart a color to the gel matrix.

The following are examples of different combination of gel and compositions which thicken to produce gels which can be used with the water absorbent polymer with anionic groups, which is referred to in its Examples as "polymer". The polymer used can be any of the polymers previously described including specifically sodium 2 propenoate.

## EXAMPLE 1

A fluid mixture is prepared using 20 parts by weight polyisobutylene, 4-1/2 parts by weight polyalpha olefin and one part by weight polyalkylene glycol. The polyalkylene glycol which is a random copolymer with 75% ethylene oxide and 25% propylene oxide substitution, with an average molecular weight of from 12,000 to 15,000 and a hydroxyl number between 5 to 10 mgs KOH per gram. The polyisobutylene has a viscosity ASTM D-445 38° C of 210-227 and the viscosity index ASTM D-567 is 95 and a molecular weight of 750 to about 1200. The polyalpha olefin used was a long chain polyalpha olefin SHF-61 manufactured by Mobil which had a viscosity ASTM D-445 at 38° C of 30.5, a viscosity index ASTM D-2270 of 132. The polyalpha olefins which can be used, as exemplified by the SHF-61 Mobil product, are typically hydrocarbons with a molecular weight from 200 to 800. The SHF-61 product is an oligomer of 1-decene. The satisfactory viscosity range of the polyalpha ofelins is from 2 centistokes at 100° C to 100 centistokes at 100° C.

Twelve parts of fluid mixture was mixed with one part of pyrogenic silica to give a gel matrix. The gel matrix has a dielectric constant of less than 3. The water absorbent polymer sodium 2 polypropenoate is mixed with the gel matrix in a 10% by weight ratio of the final mixture.

A 12v battery was hooked up to a pair of spliced wires and water was introduced into the spliced area causing a short. A spliced area was then filled with a composition of Example 1 and water began to be absorbed in 15 seconds. The short healed and the cable pair became conductive.

## EXAMPLE 2

The same composition of Example 1 can be used increasing the percentage by weight of polyalkylene glycol from the 1% to 10% range. Example 1 was duplicated with the polyalkylene glycol at 4% by weight of the gel matrix composition. The composition with 4% polyalkylene glycol performed in a substantially similar manner as described in Example 1 above.

## EXAMPLE 3

The gel matrix components of Example 1 were mixed in the same proportions. The polymer specifically sodium 2 polypropenoate is added to the gel matrix in the amount of 20% by weight of the final mixture.

It has been found that sodium 2-polypropenoate can be used in a range from at least 10% to at least up to 33% with the gel matrix and perform satisfactorily.

## EXAMPLE 4

A gel matrix of Example 1 was made substituting for the polyalkylene glycol with isopropyl alcohol. This substitution was of another hydrophilic substance of polyalkylene glycol.

The isopropyl alcohol was 5% of the weight of the gel matrix. The gel matrix was mixed in a 2:1 ratio with the polymer 2-polypropenoate. The response time to water absorption was very fast with water absorption occurring within 10 seconds.

## EXAMPLE 5

The gel matrix preparation in Example 1 was duplicated substituting 2-ethyl hexanol for the polyalkylene glycol component. The 2-ethyl hexanol was 5% by weight of the gel matrix. The gel matrix was mixed with the polymer in a 2:1 ratio. The water absorption was slower, however, the short did heal after 20 minutes.

## EXAMPLE 6

The gel matrix described in Example 1 was prepared in a similar manner with a substitution of ethylene glycol for the polyalkylene glycol described. The ethylene glycol was 5% by weight of the gel matrix. The gel was mixed with 33% by weight with polymer. There was a slower response time with water absorption starting after one minute.

## EXAMPLE 7

The gel matrix is prepared as disclosed in Example 1 with the substitution of 5% by weight of hexylene glycol for the polyalkylene glycol described therein. The gel was mixed with 33% by weight of polymer. The response time for water absorption was instantaneous with restoration of conductivity in approximately 20 minutes.

## EXAMPLE 8

The gel matrix is prepared as disclosed in Example 1 with the substitution of 5% by weight of a polypropylene with terminating hydroxyl groups with a molecular weight of about 900. The gel was mixed with 33% by weight of polymer. The response time for water absorption was instantaneous.

## EXAMPLE 9

The gel matrix of Example 1 was duplicated using a polyglycol composed of a 50-50 mixture of ethylene oxide and propylene oxide substituted polyglycol at 5% by weight of the gel matrix instead of the polyalkylene glycol. The composition of this example had instantaneous response to water absorption when the gel matrix was mixed with a 33% by weight water absorbent polymer.

## EXAMPLE 10

This example duplicates the gel formulation of Example 1 with a substitution of oleic acid for the polyalkylene glycol. The oleic acid is in a 5% by weight of the gel composition. The gel is then mixed with 33% by weight of polymer. The oleic acid composition takes a longer time to initiate water absorbency. In a test as described in Example 1 current was restored after 40 minutes.

## EXAMPLE 11

This example duplicates the gel formulation of Example 1 with a substitution of tall oil fatty acid with the polyalkylene glycol. The tall oil fatty acid is in a 5% by weight of the gel matrix. The gel is then mixed with 33% by weight of polymer.

The effects of oleic acid and tall oil fatty acid were compared to the composition without a hydrophilic component in the gel. The gel matrix of Example 1 was made without the polyalkylene component. The oleic acid and tall oil fatty acid slightly speed up the response time for absorption by about one-half. Without the hydrophilic additive it takes at least 2 minutes for the compound to initiate water absorbency.

## EXAMPLE 12

The gel matrix was prepared substituting surfactants for the polyakylene glycol. The surfactants used were SPAN ® 80 and TWEEN ® 80 which are sorbitan mono-9-octadecenoate poly oxy-1, 2-ethanediyl derivatives. The surfactants were substituted as 5% by weight of the gel matrix. The surfactants did change the consistency of the gel to some degree. The SPAN® 80 inhibited water absorbency initially. The TWEEN ® 80 did not and exhibited instantaneous water absorbency in the gel matrix with polymer added.

## EXAMPLE 13

Another surfactant was substituted for the polyalkylene glycol in Example 1. This surfactant was 2, 4, 7, 9-tetramethyl -5-decyn-4, 7-diol. This surfactant was 5% by weight of the gel matrix. The gel matrix was then mixed with 33% by weight of polymer to achieve the final composition. The final mixture exhibited good water absorbency qualities. The same surfactant was used in a 1% by weight substitution of a polyalkylene glycol in the gel matrix. The decrease in the amount of surfactant slowed the response time to water absorbency from instantaneous to 10 to 20 seconds.

## EXAMPLE 14

The polyalkylene glycol constituent of the gel matrix of Example 1 was substituted with 2 polypropylene oxide polyethers with different molecular weights. The two polyethers used had average molecular weights of 1,000 and 2,000 respectively. They were substituted for the polyalkylene glycol in a 5% by weight to the gel matrix. The water absorbency was almost instantaneous with the lower molecular weight compound and slightly slower with the higher molecular weight compound.

## EXAMPLE 15

In addition to the gel components of the gel matrix described in Example 1 other gellant types were used. Polydimethyl siloxanes of the silicone group with a molecular weight from 2,000 to 10,000 are mixed with 33% by weight of hydrocarbon polymer. The silicones slow the water absorbency and insulation effects. When testing the silicone mixed with the polymer, the healing of a shorted wire pair would take a matter of hours rather than minutes. The silicones would be used in cases where an instantaneous headling was not necessary.

## EXAMPLE 16

The water absorbetn hydrocarbon polymer can be mixed with polyalkylene glycols with a thickener such as pyrogenic silica. The molecular weight range can be from 100 to 90,000 with various alkyl substitutions. The hydrocarbon polymer can be added in a 10% to at least 33% ratio. The preferred viscosities after thickening should be from 100 centistokes at 40°C to 90,000 centistokes at 40°C.

## Example 17

The hydrocarbon polymer can be mixed with a gel from a petroleum hydrocarbon case of paraffinic-aliphatic, napthenic or a mixed base. The average molecular weight ranges from 200 to 1,000 with viscosities from 5 to 500 centistokes at 40°C. The petroleum hydrocarbons must be free of impurities which would corrode the wires of the splices.

## EXAMPLE 18

Fluorocarbon gels have also been used as a gel matrix mixed with the polymer. NYE fluoroether grease 3834, a completely fluorinated grease was used as the gel matrix. The fluoroether grease had viscosities of 26 centistokes at 98.9°C (210°F) and of 270 centistokes at 37.8°C (100°F). Seven grams of the NYE fluoroether was mixed with 3 gms of sodium 2 polypropenoate and 0.5 gms pyrogenic silica thickener. The water absorption and healing of the short was slow but effective.

EXAMPLE 19

The 9.5 gms the fluorocarbon matrix and polymer described in Example 18 was mixed with 0.5 gms of the polyalkylene glycol described in Example 1. The addition of the polyalkylene glycol to the fluorocarbon gel matrix caused instantaneous water absorption and correspondingly faster healing of the short.

**Claims**

1. A composition for protecting the wires of telecommunications and other cables carrying low direct current from damage caused by moisture contact with faults or breaks in the insulation thereof, said composition comprising a dielectric gel matrix characterised in that a polymer comprising a hydrocarbon backbone having anionic groups attached thereto is dispersed in the gel matrix, the polymer with the anionic groups, when exposed to direct current from a damaged wire, being attracted to the wire causing an insulation to develop which excludes water from the surface of the wire and said composition being relatively non-conductive to a small dc current.

2. The composition of Claim 1 wherein the anionic groups of said polymer are selected from the group consisting of carboxylate, sulfate, phosphate, sulfonate, or salts thereof, or mixtures of carboxylate, sulfate, phosphate and sulfonate groups.

3. The composition of Claim 1 or 2 wherein said polymer is selected from the group consisting of polymers of acrylates, methacrylate, diacrylate, polypropenoates, and salts of starch graft copolymers of polyacrylic acid and polyacrylamide.

4. The composition of any one of the preceding Claims wherein said gel matrix additionally comprises a tackifier.

5. The composition of any one of the preceding Claims wherein said gel matrix is selected from the group consisting of silicone, olefins, high viscosity esters, fluorocarbons, petroleum hydrocarbons, glycols and polyglycols.

6. The composition of Claim 5 additionally comprising a thickener.

7. The composition of any one of the preceding Claims additionally comprising a hydrophilic substance.

8. The composition of Claim 7 wherein said hydrophilic substance is selected from the group consisting of glycols, substituted glycols, surfactants, fatty acids, polypropylene with terminating hydroxyl groups and polyethers.

9. The composition of any one of the preceding Claims wherein the viscosity of the gel is from two centistokes at 100°C to 90,000 centistokes at 40°C.

10. A method of preventing or curing a short circuit in wires of a telecommunications cable or a cable carrying low direct current caused by moisture contacts with faults or breaks in the insulation thereof, said method comprising the steps of applying, to the wires of the cable, a composition according to any one of Claims 1 to 9.

11. The composition of any one of Claims 1 to 9 including a corrosion or rust inhibitor.

12. A composition according to any one of Claims 1 to 9 when used within a housing or closure surrounding the wires of a telecommunications or low D.C. cable.

13. The use of composition according to any one of Claims 1 to 9 within a housing or closure surrounding the wires of a telecommunications or low D.C. cable.

14. A method of manufacturing a telecommunications or low voltage D.C. cable wherein a composition according to any one of Claims 1 to 9 is injected into a housing or closure surrounding the wires of the cable during manufacture of the cable.

15. A telecommunication or low D.C. cable containing wires wherein the wires are surrounded by a composition according to any one of Claims 1 to 9

**Patentansprüche**

1. Zusammensetzung zum Schutz der Drähte von Telekommunikations- und anderen Kabeln, die geringen Gleichstrom führen, vor Schäden, die durch Feuchtigkeitskontakt aufgrund von Defekten oder Brüchen in deren Isolierung verursacht werden, wobei besagte Zusammensetzung eine dielektrische Gelmatrix umfaßt, dadurch gekennzeichnet, daß ein Polymer, das ein Kohlenwasserstoff-Rückgrat mit damit verknüpften anionischen Gruppen umfaßt, in der Gelmatrix dispergiert ist, wobei das Polymer mit den anionischen Gruppen, wenn es Gleichstrom aus einem beschädigten Draht ausgesetzt wird, zum Draht hin gezogen wird, wodurch bewirkt wird, daß sich eine Isolierung entwickelt, die Wasser von der Oberfläche des Drahtes ausschließt, und besagte Zusammensetzung relativ nicht-leitend gegenüber einem geringen Gleichstrom ist.

2. Zusammensetzung nach Anspruch 1, dadurch gekennzeichnet, daß die anionischen Gruppen besagten Polymers ausgewählt sind aus der Gruppe, die aus Carboxylat, Sulfat, Phosphat, Sulfonat oder Salzen derselben oder Mischungen von Carboxylat-, Sulfat-, Phosphat- und Sulfonatgruppen besteht.

3. Zusammensetzung nach Anspruch 1 oder 2, dadurch gekennzeichnet, daß besagtes Polymer ausgewählt ist aus der Gruppe, die aus Polymeren von Acrylaten, Methacrylat, Diacrylat, Polypropenoaten und Salzen von Stärke-Pfropfcopolymeren von Polyacrylsäure und Polyacrylamid besteht.

4. Zusammensetzung nach einem der vorangehenden Ansprüche, dadurch gekennzeichnet, daß besagte Gelmatrix zusätzlich einen Klebrigmacher umfaßt.

5. Zusammensetzung nach einem der vorangehenden Ansprüche, dadurch gekennzeichnet, daß besagte Gelmatrix ausgewählt ist aus der Gruppe, die aus Silikon, Olefinen, Estern mit hoher Viskosität, Fluorkohlenwasserstoffen, Kohlenwasserstoffen auf Erdölbasis, Glykolen und Polyglykolen besteht.

6. Zusammensetzung nach Anspruch 5, dadurch gekennzeichnet, daß sie zusätzlich ein Verdickungsmittel umfaßt.

7. Zusammensetzung nach einem der vorangehenden Ansprüche, dadurch gekennzeichnet, daß sie zusätzlich eine hydrophile Substanz umfaßt.

8. Zusammensetzung nach Anspruch 7, dadurch gekennzeichnet, daß besagte hydrophile Substanz ausgewählt ist aus der Gruppe, die aus Glykolen, substituierten Glykolen, oberflächenaktiven Substanzen, Fettsäuren, Polypropylen mit endstelligen Hydroxylgruppen und Polyethern besteht.

9. Zusammensetzung nach einem der vorangehenden Ansprüche, dadurch gekennzeichnet, daß die Viskosität des Gels von 2 Centistokes bei 100°C bis 90.000 Centistokes bei 40°C ist.

10. Verfahren zum Verhindern oder Beheben eines Kurzschlusses in Drähten eines Telekommunikationskabels oder eines Kabels, das Niedergleichstrom führt, verursacht durch Feuchtigkeitskontakte aufgrund von Defekten oder Brüchen in deren Isolierung, wobei besagtes Verfahren den Schritt umfaßt, eine Zusammensetzung nach einem der Ansprüche 1 bis 9 auf die Drähte des Kabels aufzubringen.

11. Zusammensetzung nach einem der Ansprüche 1 bis 9, einschließlich eines Korrosions- oder Rostinhibitors.

12. Zusammensetzung nach einem der Ansprüche 1 bis 9, dadurch gekennzeichnet, daß sie in einem Gehäuse oder Verschluß verwendet wird, das (der) die Drähte eines Telekommunikations-oder Niedergleichstromkabels umgibt.

13. Verwendung einer Zusammensetzung nach einem der Ansprüche 1 bis 9 in einem Gehäuse oder einem Verschluß, das (der) die Drähte eines Telekommunikations- oder Niedergleichstromkabels umgibt.

14. Verfahren zur Herstellung eines Telekommunikations- oder Niederspannungsgleichstromkabels, dadurch gekennzeichnet, daß eine Zusammensetzung nach einem der Ansprüche 1 bis 9 in ein Gehäuse oder einen Verschluß das (der) die Drähte des Kabels umgibt, während der Herstellung des Kabels eingespritzt wird.

15. Telekommunikations- oder Niedergleichstromkabel mit Drähten, wobei die Drähte von einer Zusammensetzung nach einem der Ansprüche 1 bis 9 umgeben sind.

**Revendications**

1. Une composition pour protéger les fils de télécommunications et d'autres câbles véhiculant du courant continu contre des dommages causés par contact d'humidité avec des défauts ou ruptures dans l'isolation de ces derniers, ladite composition comprenant une matrice de gel diélectrique caractérisée en ce qu'un polymère comprenant une armature d'hydrocarbures ayant des groupes anioniques combinés à celle-ci est dispersé dans la matrice de gel, le polymère avec les groupes anioniques étant attiré vers le fil quand il est exposé au courant continu provenant d'un fil détérioré, entraînant le développement d'une isolation qui exclut l'eau de la surface du fil, et ladite composition étant relativement non conductrice pour un courant continu faible.

2. La composition de la revendication 1 dans laquelle les groupes anioniques dudit polymère sont de préférence choisis parmi le groupe constitué de carboxylate, de sulfate, de phosphate et de sulfonate et de sels de ceux-ci, ou de mélanges de groupes de carboxylate, de sulfate, de phosphate et de sulfonate.

3. La composition de la revendication 1 ou 2 dans laquelle ledit polymère est choisi parmi le groupe constitué de polymères d'acrylates, de méthacrylate, de diacrylate, de polypropénoates et de sels de copolymères greffés d'amidon d'acide polyacrylique et de polyacrylamide.

4. La composition de l'une quelconque des revendications précédentes dans laquelle ladite matrice de gel comprend en outre un adhésif.

5. La composition de l'une quelconque des revendications précédentes dans laquelle la matrice de gel est choisie dans le groupe constitué de silicones, d'oléfines, d'esters à viscosité élevée, de carbures fluorés, d'hydrocarbures de pétrole, de glycols et de polyglycols.

6. La composition de la revendication 5 comprenant en outre un épaississant.

7. La composition de l'une quelconque des revendications précédentes comprenant en outre une substance hydrophile.

8. La composition de la revendication 7 dans laquelle ladite substance hydrophile est choisie parmi le groupe constitué de glycols, de glycols substitués, de tensioactifs, d'acides gras, de polypropylène avec des groupes d'hydroxyle en fin de chaîne et des polyéthers.

9. La composition de l'une quelconque des revendications précédentes dans laquelle la viscosité du gel est de deux centistokes à 100 °C à 90.000 centistokes à 40 °C.

10. Un procédé pour éviter ou remédier à un court-circuit dans des fils d'un câble de télécommunications ou d'un câble véhiculant du courant continu causé par des contacts d'humidité avec des défauts ou des ruptures dans l'isolation de celui-ci, ledit procédé comprenant l'étape d'appliquer aux fils du câble une composition selon l'une quelconque des revendications 1 à 9.

11. La composition de l'une quelconque des revendications 1 à 9 incluant un inhibiteur de corrosion ou de rouille.

12. Une composition selon l'une quelconque des revendications 1 à 9 quand elle est utilisée à l'intérieur d'un coffret ou d'un logement entourant les fils d'un câble de télécommunications ou d'un câble pour courant continu faible.

13. L'utilisation d'une composition selon l'une quelconque des revendications 1 à 9 à l'intérieur d'un coffret ou d'un logement entourant les fils d'un câble de télécommunications ou d'un câble pour courant continu faible.

14. Un procédé pour fabriquer un câble de télécommunications ou de courant continu sous tension faible dans lequel une composition selon l'une quelconque des revendications 1 à 9 est injectée dans un coffret ou logement entourant les fils du câble pendant la fabrication du câble.

15. un câble de télécommunications ou pour courant continu faible contenant des fils dans lequel les fils sont entourés par une composition selon l'une quelconque des revendications 1 à 9.